# EUROPEAN PATENT APPLICATION

(11) **EP 4 482 212 A1**
(43) Date of publication of application: **25.12.2024**
(21) Application number: 22925448.7
(22) Date of filing: 14.02.2022
(51) Int. Cl.: H04W 36/06

(54) **BANDWIDTH PART SWITCHING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Stöckeler, Ferdinand
(86) International application number: PCT/CN2022/076234
(87) International publication number: WO 2023/151086

(57) **Abstract**

Provided in the embodiments of the present disclosure are a BWP switching method and apparatus, a communication device, and a storage medium. The bandwidth part (BWP) switching method is executed by a first type of terminal, and the method comprises: in response to the fact that the first type of terminal needs to perform random access, switching the first type of terminal from an active BWP to an initial BWP, the initial BWP being configured with a related channel for random access.

## Description

### TECHNICAL FIELD

The disclosure relates to a field of wireless communication technology but is not limited to the field of wireless communication technology, in particular to a bandwidth part (BWP) switching method, a BWP switching apparatus, a communication device and a storage medium.

### BACKGROUND

Different types of terminals may be configured with different initial bandwidth parts (BWPs) and active BWPs. The initial BWP may include an initial uplink (UL) BWP and an initial downlink (DL) BWP. A random access related channel may be configured within the initial BWP, so that the terminal can perform a random access on the random access related channel configured on the initial BWP.

The active BWP that the terminal is currently working on may be different from the initial BWP.

### SUMMARY

Embodiments of the disclosure provide a bandwidth part (BWP) switching method, a BWP switching apparatus, a communication device and a storage medium.

According to a first aspect of embodiments of the disclosure, a BWP switching method, performed by a first type of terminal, is provided. The method includes: in response to a need for the first type of terminal to perform a random access, the first type of terminal switching from an active BWP to an initial BWP, in which the initial BWP is configured with a random access related channel.

According to a second aspect of embodiments of the disclosure, a BWP switching apparatus is provided. The apparatus includes:
a switching module, configured to, in response to a need for the first type of terminal to perform a random access, enable the first type of terminal to switch from an active BWP to an initial BWP, in which the initial BWP is configured with a random access related channel.

According to a third aspect of embodiments of the disclosure, a communication device is provided. The communication device includes a processor, a transceiver, a memory and an executable program stored on the memory and executable by the processor. When the executable program is executed by the processor, the BWP switching method described in the above first aspect is implemented.

According to a fourth aspect of embodiments of the disclosure, a computer storage medium having an executable program stored thereon is provided. When the executable program is executed by a processor, the BWP switching method described in the above first aspect is implemented.

In the technical solutions of embodiments of the disclosure, if the active BWP on which the first type of terminal is currently working is not the initial BWP configured with the random access related channel, in response to a need of the random access, the first type of terminal switches to the initial BWP configured with the random access related channel, which reduces a random access failure that occurs when the terminal randomly switches to an initial BWP that is not configured with the random access related channel among multiple initial BWPs, or reduces a long random access delay caused by the need to repeatedly switch BWP, thereby improving a speed and success rate of the random access.

It should be understood that the above general description and the following detailed descriptions are explanatory only and do not limit the embodiments of the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the embodiments of the disclosure.
FIG. 1 illustrates a structural diagram of a wireless communication system according to an embodiment.
FIG. 2 illustrates a flowchart of a bandwidth part (BWP) switching method according to an embodiment.
FIG. 3 illustrates a flowchart of a BWP switching method according to an embodiment.
FIG. 4 illustrates a flowchart of a BWP switching method according to an embodiment.
FIG. 5 illustrates a schematic diagram of BWP switching according to an embodiment.
FIG. 6 illustrates a block diagram of a BWP switching apparatus according to an embodiment.
FIG. 7 illustrates a block diagram of a communication device according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the embodiments of the disclosure.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

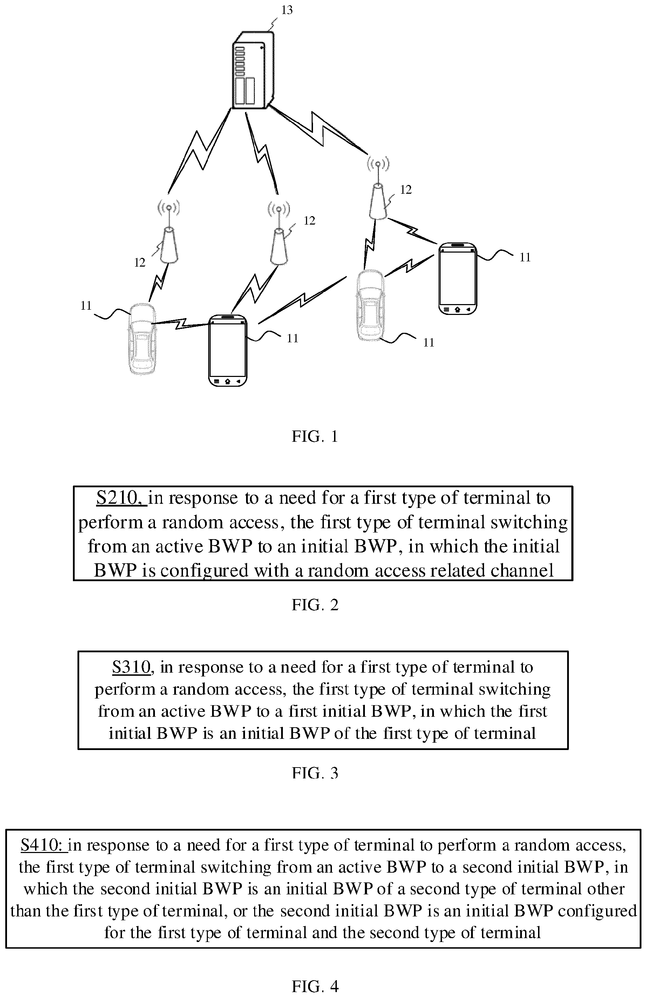

FIG. 1 illustrates a structural diagram of a wireless communication system according to an embodiment. As illustrated in FIG. 1, the wireless communication system is a communication system based on the cellular mobile communication technology. The wireless communication system may include: a plurality of user equipments (UEs) 11 and a plurality of access devices 12.

The UE 11 may be a device that provides voice and/or data connectivity to a user. The UE 11 may communicate with one or more core networks via a radio access network (RAN). The UE 11 may be an Internet of Things (IoT) UE, such as a sensor device, a cell phone (or "cellular" phone), and a computer with the IoT UE. Or, the UE 11 may be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a UE. Or, the UE 11 may be an unmanned aerial vehicle device. Or, the UE 11 may be an in-vehicle device, for example, an electronic control unit having a wireless communication function or a wireless communication device external to the electronic control unit. Or, the UE 11 may be a roadside device, for example, a street light, a signal light, or other roadside devices having the wireless communication function.

The access device 12 may be a network side device in the wireless communication system. The wireless communication system may be a 4th Generation (4G) mobile communication system, also known as Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called New Generation-Radio Access Network (NG-RAN). Or the wireless communication system may be a machine type communication (MTC) system.

The access device 12 may be an evolved access device (eNB) employed in the 4G system. Or, the access device 12 may be an access device (gNB) with a centralized-distributed architecture employed in the 5G system. When the access device 12 adopts the centralized-distributed architecture, the access device 12 usually includes a central unit (CU) and at least two distributed units (DUs). The CU is equipped with a protocol stack including a Packet Data Convergence Protocol (PDCP) layer, a Radio Link Control (RLC) layer, and a Media Access Control (MAC) layer. The DU is equipped with a protocol stack of a physical (PHY) layer, and the specific implementation of the access device 12 is not limited in embodiments of the disclosure.

A wireless connection is established between the access device 12 and the UE 11 via a radio interface. In different implementations, the radio interface is a radio interface based on the 4G standard. Or, the radio interface is a radio interface based on the 5G standard, such as a new radio (NR) interface. Or, the radio interface may be a radio interface based on the standard of the next generation of 5G.

As illustrated in FIG. 2, the embodiments of the disclosure provide a BWP switching method, which is performed by a first type of terminal. The method includes the following steps.

At step S210, in response to a need for the first type of terminal to perform a random access, the first type of terminal switches from an active BWP to an initial BWP, in which the initial BWP is configured with a random access related channel.

The random access related channel refers to a channel used for perform the random access.

In some embodiments, the first type of terminal may be a terminal supporting a bandwidth smaller than a preset threshold, or a terminal of a preset type.

In other embodiments, the first type of terminal may be any terminal that supports a bandwidth smaller than that of a second type of terminal.

For example, the first type of terminal may be, for example, a reduced capability (RedCap) terminal, an MTC terminal, or an IoT terminal. The second type of terminal may include, but is not limited to, an ordinary terminal device (which may be called legacy UE or non-RedCap UE) and an enhanced Mobile Broadband (eMBB) terminal.

The BWP switching method provided by the embodiments of the disclosure is applied to the first type of terminal, and the active BWP configured for the first type of terminal is different from the initial BWP configured with the random access related channel.

For example, in response to uplink out-of-synchronization of the first type of terminal, or when the first type of terminal needs to request uplink resources from a network, the terminal needs to perform the random access for various reasons after completing an initial access. If the first type of terminal needs to perform the random access, it switches from the active BWP on which it is currently working to the initial BWP configured with the random access related channel. In this way, the current requirement of the first type of terminal performing the random access can be met.

The random access related channel here may include: a resource scheduling channel for obtaining a random access resource and/or a random access channel for performing the random access.

In this way, when the first type of terminal needs to perform the random access, a random access failure that occurs when the first type of terminal switches to the initial BWP that is not configured with the random access related channel from the current active BWP can be reduced, or a long random access delay caused by the need to re-switch BWP can be reduced.

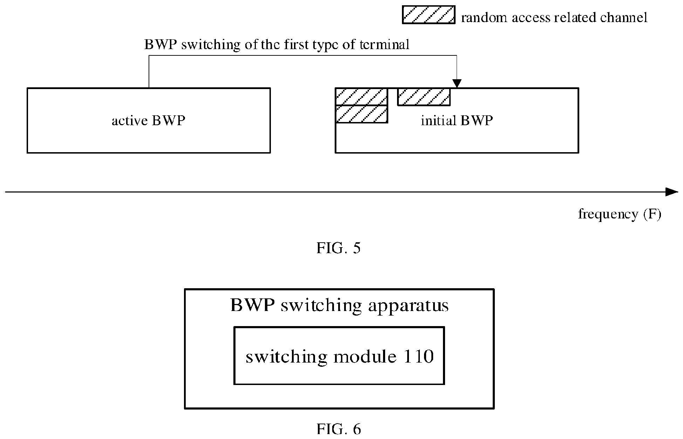

In some embodiments, the first type of terminal may determine the initial BWP configured with the random access related channel according to BWP configuration information. As illustrated in FIG. 5, the first type of terminal can switch from the active BWP on which it is currently working to the initial BWP configured with the random access related channel.

In some embodiments, configuration information of the initial BWP may be used to indicate at least one of the following parameters: configuration information of the initial BWP itself, or channel configuration information on the initial BWP. The channel configuration information may be used to determine whether the corresponding initial BWP is configured with the random access related channel.

In other embodiments, considering that the first type of terminal may need to select the initial BWP configured with the random access related channel among multiple initial BWPs for performing the random access, one or more initial BWPs each configured with the random access related channel may be explicitly or implicitly indicated by the configuration information of the initial BWP. The explicit indication refers to adding indication information that indicates whether an initial BWP is configured with the random access related channel. The indication information may be indicated by one or more newly added bits, or by reserved bits or reserved bit values in the configuration information of the initial BWP in the related art. In this way, it is possible to know that each of the one or more BWPs is configured with the random access related channel without parsing the channel configuration information on each initial BWP respectively. The implicit indication refers to, according to a communication protocol or a configuration, determining that each of one or several more BWPs is configured with the random access related channel.

In some embodiments, the random access related channel includes at least one of the following:
a physical random access channel (PRACH);
a physical downlink shared channel (PDSCH) that carries a random access response; or
a physical downlink control channel (PDCCH) that schedules a random access response.

A physical random channel may be used for the first type of terminal to send a random access request. For example, one or more random access occasions are configured on the PRACH, and the first type of terminal may send the random access request based on any of the random access occasions.

In the embodiments of the disclosure, the random access methods supported by the first type of terminal may include: 4-step random access and/or 2-step random access.

In some embodiments, if the first type of terminal supports some of the random access methods, the first type of terminal switches from the active BWP to an initial BWP with a related channel corresponding to the random access method supported by the first type of terminal.

In the embodiments of the disclosure, after receiving the random access request, the base station sends a random access response to the terminal, for example, on a PDSCH. The resource for sending the random access response may be scheduled via a PDCCH. Therefore, the random access related channel in the embodiments of the disclosure may include: the PDCCH that schedules the random access response.

In some embodiments, the initial BWP to which the first type of terminal is switched may be configured with a candidate transmission resource set for the PDCCH. The candidate transmission resource set is the random search space. If the candidate transmission resource set for the PDCCH that schedules the random access response is located on the initial BWP, the PDCCH must be configured to be on the initial BWP. Thus, in a sense this can be considered as an implicit indication.

As illustrated in FIG. 3, the embodiments of the disclosure provide a BWP switching method, which is performed by a first type of terminal. The method includes the following steps.

At step S310, in response to a need for the first type of terminal to perform a random access, the first type of terminal switches from an active BWP to a first initial BWP, in which the first initial BWP is an initial BWP corresponding to the first type of terminal.

The first initial BWP may be an initial BWP specifically configured for the first type of terminal and configured with a random access related channel. The first initial BWP may be an initial BWP configured with the random access related channel among a plurality of initial BWPs of the first type of terminal.

The first initial BWP may be the initial BWP specifically configured for the first type of terminal, and a second type of terminal is unable to use the first initial BWP. Certainly, according to an actual network condition, not all the first type of terminals are configured with the dedicated first initial BWP. If the first type of terminal switches to the first initial BWP, since the first initial BWP is the initial BWP configured for the first type of terminal, a bandwidth of the first initial BWP is adapted to the first type of terminal.

In an embodiment, step S310 includes: in response to a need for the first type of terminal to perform the random access and the first initial BWP being configured for the first type of terminal, the first type of terminal switches from the active BWP to a third initial BWP, in which the third initial BWP is a specific initial BWP configured with the random access related channel on the first initial BWP.

In some cases, the network may configure the initial BWP configured with the random access related channel, and the third initial BWP may be a specific initial BWP among a plurality of initial BWPs each configured with the random access related channel.

The third initial BWP may be determined by the first type of terminal based on a network indication or based on a communication protocol.

That is, in response to the first type of terminal determining that there are two or more first initial BWPs each configured with the random access related channel, the first type of terminal determines the third initial BWP from the two or more first initial BWPs.

As illustrated in FIG. 4, the embodiments of the disclosure provide a BWP switching method, which is performed by a first type of terminal. The method includes the following steps.

At step S410, in response to a need for the first type of terminal to perform a random access, the first type of terminal switches from an active BWP to a second initial BWP.

The second initial BWP is an initial BWP configured for the second type of terminal, or an initial BWP configured for the first type of terminal and the second type of terminal. The second type of terminal is a terminal other than the first type of terminal.

In an implementation, the second type of terminal is any type of terminal other than the first type of terminal. For example, the second type of terminal may support a maximum bandwidth greater than a bandwidth of the first type of terminal.

The second initial BWP may be an initial BWP configured for the second type of terminal, or an initial BWP configured for both the first type of terminal and the second type of terminal.

For example, the random access related channels of the first type of terminal and the second type of terminal can be configured on the same initial BWP, in this case the first type of terminal may switches from the current active BWP to a dedicated initial BWP (i.e., second initial BWP) of the second type of terminal or a second initial BWP that is shared by both the first type of terminal and the second type of terminal.

In some embodiments, the terminal switches from the active BWP to the second initial BWP, in which the second initial BWP is configured with a PRACH and/or includes a random search space.

If the second initial BWP is configured with the PRACH, the first type of terminal can directly send a random access request on the PRACH. If the second initial BWP is configured with the random search space, after the first type of terminal switches to the second initial BWP, first type of terminal can monitor scheduling of a random access response at the network side through monitoring of the random search space.

In some embodiments, the active BWP includes: an active uplink BWP, and/or, an active downlink BWP. The active uplink BWP is used for uplink transmission of the terminal, and the active downlink BWP is used for downlink reception of the terminal.

In some embodiments, the initial BWP includes: an initial uplink BWP, and/or, an initial downlink BWP. The initial uplink BWP may be used for initial uplink access of the terminal and used for the terminal to send a random access request, etc. The initial downlink BWP may be used for initial downlink access of the terminal, and/or monitoring of system messages and/or monitoring of paging messages, and the like.

In some embodiments, in response to a need for the first type of terminal to perform the random access, the first type of terminal switching from an active BWP to an initial BWP, includes:
in response to the need for the first type of terminal to perform the random access and the first type of terminal being configured with two or more initial BWPs, the first type of terminal switches from the active BWP to the initial BWP configured with the random access related channel.

The two or more initial BWPs may include: two or more initial BWPs corresponding to all types of terminals, or, two or more initial BWPs corresponding to the first type of terminal.

If the communication system is configured with two or more initial BWPs, in response to a need for the first type of terminal to perform the random access, the first type of terminal needs to select the initial BWP configured with the random access related channel from the two or more initial BWPs.

With the introduction of RedCap terminals, separate initial UL BWPs may be configured for the RedCap terminals. From the perspective of the network, there may be two or more initial UL BWPs exist in the system, and it is possible to randomly access corresponding UL channels, such as PRACH, PUCCH, PUSCH, etc., respectively on two initial UL BWPs. In a DL direction, the network may also configure separate initial DL BWPs for the RedCap terminals. There may be one or more initial DL BWPs, and different initial DL BWPs may include different DL channels of the terminal. For example, some initial DL BWPs may include system messages, and some initial DL BWPs may include paging messages. Some DL channels may only include random access related DL messages.

When there are multiple initial UL BWPs and/or initial DL BWPs, it is still uncertain how to set the BWP switching method.

In view of this, in response to a need for the first type of terminal to perform the random access, if the currently monitored active BWP is not configured with a random access channel, the terminal switches from the current active BWP to the first initial BWP or the second initial BWP. The first initial BWP is an initial BWP dedicated to the first type of terminal, and different types of terminals other than the first type of terminal may not be able to use the first initial BWP. The second initial BWP may be an initial BWP configured for the second type of terminal, or may be an initial BWP that can be configured for the first type of terminal and the second type of terminal.

The active BWP includes at least one of: an active UL BWP or an active DL BWP. The second initial BWP includes at least one of a first initial DL BWP or a first initial UL BWP. The second initial BWP includes at least one of a second initial DL BWP or a second initial UL BWP. The random access channel at least includes a PRACH, a PDSCH for carrying a random access response, and/or a PDCCH for scheduling the random access response, and/or a random search space for scheduling of the random access response.

In response to configuring the second initial BWP for the first type of terminal, the first type of terminal switches to the second initial BWP.

In this case, it is required that the PRACH must be included on the second UL BWP, and the random search space for the random access response must be included on the second DL BWP.

The first type of terminal determines the initial BWP where the corresponding random access channel is located as a target BWP, and switches from the current active BWP to the target BWP.

For example, in the uplink, there are two initial UL BWPs in the system, one initial UL BWP includes a PUSCH, and the other includes a PRACH. In this case, the terminal switches to the initial UL BWP including the PRACH. That is, in an implementation, the first type of terminal preferentially switches to the initial UL BWP including the PRACH.

For another example, in the downlink, if there are 3 initial DL BWPs in the system, one includes a system message, one includes a paging message, and the last one includes the random search space for the random access response, the terminal switches to the initial DL BWP including the random search space.

In an implementation, the first type of terminal preferentially switches to the initial DL BWP including the random search space. From the above statement, it is clear that the way of determining an UL BWP and the way of determining a DL BWP can be executed independently or together.

As illustrated in FIG. 6, the embodiments of the disclosure provide a BWP switching apparatus. The apparatus includes:
a switching module 110, configured to, in response to a need for a first type of terminal to perform a random access, enable the first type of terminal to switch from an active BWP to an initial BWP, in which the initial BWP is configured with a random access related channel.

The BWP switching apparatus may be included in the first type of terminal.

The random access related channel is a channel for performing the random access.

In some embodiments, the switching module 110 may be a program module. When the program module is executed by a processor, the program module can implement switching of the first type of terminal from the active BWP to the initial BWP configured with the random access related channel.

In some embodiments, the switching module 110 may be a hardware and software combination module, which includes, but is not limited to, various programmable arrays. The programmable arrays include, but are not limited to, field programmable arrays and/or complex programmable arrays.

In some embodiments, the switching module 110 may be a pure hardware module, which includes, but is not limited to, an application specific integrated circuit.

In some embodiments, the first type of terminal may be a terminal that supports a bandwidth less than a preset threshold, or a terminal of a preset type.

In some embodiments, the first type of terminal may be any terminal that supports a bandwidth less than that of a second type of terminal.

For example, the first type of terminal may be, for example, a RedCap terminal, an MTC terminal, or an IoT terminal. The second type of terminal may include, but is not limited to, an ordinary terminal device (which may be called legacy UE or non-RedCap UE) and an eMBB terminal.

The BWP switching method provided by the embodiments of the disclosure is applied to the first type of terminal, and the active BWP configured for the first type of terminal is different from the initial BWP configured with the random access related channel.

For example, in response to uplink out-of-synchronization of the first type of terminal, or when the first type of terminal needs to request uplink resources from a network, the first type of terminal needs to perform the random access for various reasons after completing the initial access. If the first type of terminal needs to perform the random access, it switches from the active BWP on which it is currently working to the initial BWP configured with the random access related channel. In this way, the current requirement of the first type of terminal performing the random access can be met.

The random access related channel may include: a resource scheduling channel for obtaining a random access resource and/or a random access channel for performing the random access.

In this way, when the first type of terminal needs to perform the random access, the random access failure that occurs when the first type of terminal switches to an initial BWP that is not configured with the random access related channel from the current active BWP can be reduced, or the long random access delay caused by the need to re-switch BWP can be reduced.

In some embodiments, the random access related channel includes at least one of the following:
a PRACH;
a PDSCH that carries a random access response; or
a PDCCH that schedules a random access response.

In some embodiments, the initial BWP is also configured with a random search space. The random search space is a candidate transmission resource set for the PDCCH that schedules the random access response.

In some embodiments, the switching module 110 is configured to: in response to the need for the first type of terminal to perform the random access, enable the first type of terminal to switch from the active BWP to a first initial BWP or a second initial BWP;
in which the first initial BWP is an initial BWP of the first type of terminal, and
the second initial BWP is an initial BWP of a second type of terminal other than the first type of terminal, or the second initial BWP is an initial BWP configured for the first type of terminal and the second type of terminal.

In some embodiments, a bandwidth supported by the first type of terminal is smaller than a bandwidth supported by the second type of terminal.

In some embodiments, the first type of terminal at least includes: a RedCap terminal.

In some embodiments, the terminal switches from the active BWP to the second initial BWP, and the second initial BWP is configured with a PRACH and/or includes a random search space.

In some embodiments, the active BWP includes: an active UL BWP and/or an active DL BWP;
and/or,
the initial BWP includes: an initial UL BWP and/or an initial DL BWP.

In some embodiments, the switching module 110 is configured to: in response to the need for the first type of terminal to perform the random access and multiple initial BWPs being configured for the first type of terminal, enable the first type of terminal to switch from the active BWP to the initial BWP configured with the random access related channel.

Embodiments of the disclosure provide a communication device. The communication device includes:
a memory for storing instructions executable by a processor; and
the processor connected to the memory;
in which the processor is configured to perform the BWP switching method provided by any of the preceding technical solutions.

The processor includes various types of storage mediums that are non-transitory computer storage mediums capable of continuing to memorize information stored thereon after the communication device is powered down.

The communication device may at least include the first type of terminal described above.

The processor may be connected to the memory via a bus, etc., for reading executable programs stored on the memory, e.g. at least one of the methods as shown in FIGS. 2-4.

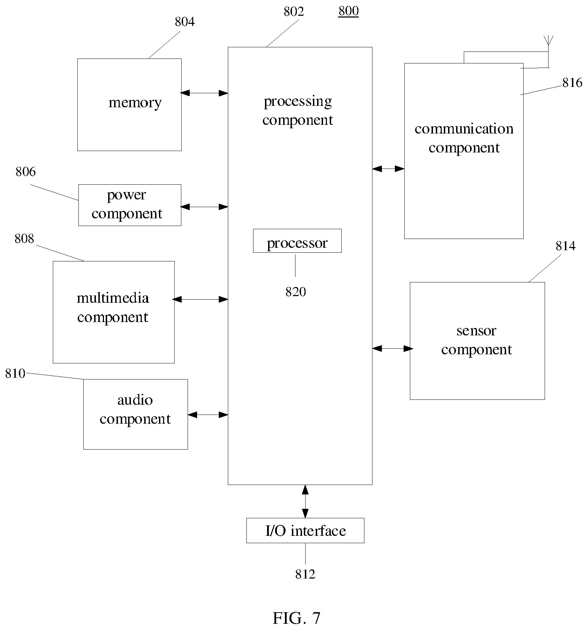

FIG. 7 illustrates a block diagram of a terminal 800 according to an embodiment. For example, the terminal 800 may be a mobile phone, a computer, a digital broadcasting UE, a message transceiver device, a game console, a tablet device, a medical device, a fitness device or a personal digital assistant. The terminal 800 may be at least the first type of terminal as described previously.

As illustrated in FIG. 7, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as Wi-Fi, 2G or 3G, or a combination thereof. In an embodiment, the communication component 816 receives a broadcast signal or broadcast associated information from an external broadcast management system via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some embodiments, the terminal 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In some embodiments, there is also provided a non-transitory computer readable storage medium including executable instructions, such as the memory 804, executable by the processor 820 in the terminal 800, for performing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A bandwidth part (BWP) switching method, performed by a first type of terminal, comprising:
in response to a need for the first type of terminal to perform a random access, the first type of terminal switching from an active BWP to an initial BWP, wherein the initial BWP is configured with a random access related channel.

2. The method of claim 1, wherein the random access related channel comprises at least one of:
a physical random access channel (PRACH);
a physical downlink shared channel (PDSCH) that carries a random access response; or
a physical downlink control channel (PDCCH) that schedules a random access response.

3. The method of claim 1 or 2, wherein the initial BWP is further configured with a random search space, the random search space is a candidate transmission resource set for a PDCCH that schedules a random access response.

4. The method of any one of claims 1-3, wherein in response to the need for the first type of terminal to perform the random access, the first type of terminal switching from the active BWP to the initial BWP, comprises:
in response to the need for the first type of terminal to perform the random access, the first type of terminal switching from the active BWP to a first initial BWP or a second initial BWP;
wherein the first initial BWP is an initial BWP of the first type of terminal, and
the second initial BWP is an initial BWP of a second type of terminal other than the first type of terminal, or the second initial BWP is an initial BWP configured for the first type of terminal and the second type of terminal.

5. The method of claim 4, wherein a bandwidth supported by the first type of terminal is smaller than a bandwidth supported by the second type of terminal.

6. The method of claim 5, wherein the first type of terminal comprises at least:
a reduced capability (RedCap) terminal.

7. The method of any one of claims 4-6, wherein the first type of terminal switches from the active BWP to the second initial BWP, and the second initial BWP is configured with a PRACH and/or includes a random search space.

8. The method of any one of claims 1-7, wherein the active BWP comprises: an active uplink BWP and/or an active downlink BWP;
and/or,
the initial BWP comprises: an initial uplink BWP and/or an initial downlink BWP.

9. The method of any one of claims 1-8, wherein in response to the need for the first type of terminal to perform the random access, the first type of terminal switching from the active BWP to the initial BWP, comprises:
in response to the need for the first type of terminal to perform the random access and a plurality of initial BWPs being configured for the first type of terminal, the first type of terminal switching from the active BWP to the initial BWP configured with the random access related channel.

10. A bandwidth part (BWP) switching apparatus, comprising:
a switching module, configured to, in response to a need for a first type of terminal to perform a random access, enable the first type of terminal to switch from an active BWP to an initial BWP, wherein the initial BWP is configured with a random access related channel.

11. The apparatus of claim 11, wherein the random access related channel comprises at least one of:
a physical random access channel (PRACH);
a physical downlink shared channel (PDSCH) that carries a random access response; or
a physical downlink control channel (PDCCH) that schedules a random access response.

12. The apparatus of claim 10 or 11, wherein the initial BWP is further configured with a random search space, the random search space is a candidate transmission resource set for a PDCCH that schedules a random access response.

13. The apparatus of any one of claims 10-11, wherein the switching module is configured to, in response to the need for the first type of terminal to perform the random access, enable the first type of terminal to switch from the active BWP to a first initial BWP or a second initial BWP;
wherein the first initial BWP is an initial BWP of the first type of terminal, and
the second initial BWP is an initial BWP of a second type of terminal other than the first type of terminal, or the second initial BWP is an initial BWP configured for the first type of terminal and the second type of terminal.

14. The apparatus of claim 13, wherein a bandwidth supported by the first type of terminal is smaller than a bandwidth supported by the second type of terminal.

15. The apparatus of claim 14, wherein the first type of terminal comprises at least:
a reduced capability (RedCap) terminal.

16. The apparatus of any one of claims 13-15, wherein the first type of terminal switches from the active BWP to the second initial BWP, and the second initial BWP is configured with a PRACH and/or includes a random search space.

17. The apparatus of any one of claims 10-16, wherein the active BWP comprises: an active uplink BWP and/or an active downlink BWP;
and/or,
the initial BWP comprises: an initial uplink BWP and/or an initial downlink BWP.

18. The apparatus of any one of claims 10-17, wherein the switching module is configured to, in response to the need for the first type of terminal to perform the random access and a plurality of initial BWPs being configured for the first type of terminal, enable the first type of terminal to switch from the active BWP to the initial BWP configured with the random access related channel.

19. A communication device comprising a processor, a transceiver, a memory and executable program stored on the memory and executable by the processor, wherein when the executable program is executed by the processor, the method of any one of claims 1-9 is implemented.

20. A computer storage medium having an executable program stored thereon, wherein when the executable program is executed by a processor, the method of any one of claims 1-9 is implemented.
